# EUROPÄISCHE PATENTSCHRIFT

(11) **EP 0 491 158 B1**
(45) Veröffentlichungstag und Bekanntmachung des Hinweises auf die Patenterteilung: **27.04.1994**
(21) Anmeldenummer: 91119197.1
(22) Anmeldetag: 12.11.1991
(51) Int. Cl.: B60J 7/06

(54) **Faltdach für Fahrzeuge**
Foldable roof for vehicle
Toit pliant pour véhicule

(30) Priorität: 17.12.1990 DE 4040249
(43) Veröffentlichungstag der Anmeldung: 24.06.1992
(73) Patentinhaber: Webasto AG Fahrzeugtechnik, D-82131 Stockdorf (DE)
(72) Erfinder: Clemens, Ernst, W-8000 München 19 (DE); Schleicher, Bernd, W-8000 München 19 (DE); Poppele, Gebhard, W-8000 München 50 (DE); Fürst, Arpad, W-8034 Germering (DE); Vecchioni, Bernhard, W-8035 Gauting (DE); Schwab, Günther, W-8027 Neuried (DE); Koll, Jürgen, W-8022 Grünwald (DE); Schmid, Christian, W-8000 München 21 (DE)

(56) Entgegenhaltungen:
- DE-A- 3 102 164
- GB-A- 311 192
- US-A- 3 348 877

## Beschreibung

Die Erfindung bezieht sich auf ein Faltdach für Fahrzeuge, insbesondere Personenfahrzeuge, mit einem faltbaren Abdeckteil, das eine in einer festen Dachfläche des Fahrzeugs vorgesehene Dachöffnung wahlweise verschließt oder wenigstens teilweise freigibt, und das wenigstens zwei in Fahrzeuglängsrichtung hintereinander angeordnete, übereinander klappbare und gekoppelte Dachflächenabschnitte umfaßt, wobei wenigstens eine Querseite des Abdeckteils über eine verrastbare Verbindungseinrichtung mit der festen Dachfläche lösbar verbunden ist.

Aus DE-A- 31 02 164 ist ein Kraftfahrzeug mit einem festen Dach, das wenigstens eine Öffnung und eine flexible Abdeckung für diese Öffnung aufweist, bekannt. Ein Endbereich der flexiblen Abdeckung ist in der Nähe des vorderen Randes der Öffnung fest mit dem Dach verbunden. Der andere Endbereich der flexiblen Abdeckung ist mit Verbindungselementen versehen, die in einer aufgespannten Schließstellung der Abdeckung eine Schnellkupplung mit an dem hinteren Rand der Öffnung angebrachten Spannteilen ermöglichen. Die flexible Abdeckung läßt sich zusammenfalten und mittels eines in der festen Dachfläche vorgesehenen Formstückes am Fahrzeugdach verstauen und in dieser Lage mit Hilfe von Befestigungsorganen festlegen. Alternativ läßt sich die flexible Abdeckung in eine aufgespannte Lüftungsstellung ausstellen. Jede flexible Abdeckung umfaßt nur einen Dachflächenabschnitt. Bei dieser Auslegung eines Fahrzeugdaches läßt sich daher nur eine relativ kleine Dachöffnung bereitstellen. Ferner ist bei diesem Fahrzeugdach die flexible Abdeckung unlösbar mit wenigstens einem festen Dachteil verbunden. Zum anderen ist die Variationsmöglichkeit für das Freilegen der Dachöffnung eingeschränkt, nämlich entweder Zusammenfalten und vollständiges Freilegen oder Ausstellen in Lüftungsstellung.

Aus DE-C- 39 18 253 ist eine flexible Dachhaut eines Fahrzeugs für eine Cabrio-Version bekannt, bei dem die flexible Dachhaut mehrere in Fahrzeuglängsrichtung hintereinander angeordnete und gekoppelte sowie aufgespannte Flächenabschnitte umfaßt. Bei dieser flexiblen Dachhaut eines Fahrzeugs soll eine Aussteifung eines Flächenabschnittes derselben dahingehend verbessert werden, daß die flexible Dachhaut in höherem Maße zur Aussteifung in der Überströmung liegender Flächenabschnitte der Dachhaut geeignet ist. Hierzu sind Verstärkungen aus faltbaren Verstärkungsbändern vorgesehen, die Verstärkungsbandanordnungen bilden, die als Beulversteifungen für die Flächenabschnitte dienen. Bei diesem Dachaufbau handelt es sich um ein sogenanntes Klappverdeck. Eine solche Verdeckkonstruktion ist teuer herzustellen und soll die gesamte Dachhaut bilden und überspannen. Sie ist daher nur für spezielle Fahrzeugtypen eingerichtet.

In DE-A- 40 09 842 ist ein Sonnendach für ein Kraftfahrzeug mit einem Segeltuchverdeck angegeben. Zur Stützung des Segeltuchverdecks sind ein erster Gelenkmechanismus und eine Mehrzahl von zweiten Gelenkgliedmechanismen an Führungsschienen gelagert, welche in Querrichtung beabstandet sind. Zur Unterbindung von Geräuschen beim Faltvorgang des Segeltuchverdecks wird ein Geräuschdämpfer vorgesehen, welcher an einem Basisteil an einer rückwärtigen und unteren Seite der Öffnung befestigt ist. Das Segeltuchverdeck verbleibt aber immer am Fahrzeugdach.

Demgegenüber liegt der Erfindung die Aufgabe zu Grunde, ein Faltdach für Fahrzeuge der gattungsgemäßen Art bereitzustellen, welches bei einer kostengünstigen Herstellung und einen wenig Aufwand erfordernden Einbau eine Vielzahl von Variationsmöglichkeiten für die Freilegung der Dachöffnung derart gestattet,daß sich im Bedarfsfall auch eine möglichst große Dachöffnung freilegen läßt.

Nach der Erfindung wird diese Aufgabe bei einem Faltdach für Fahrzeuge, welches die Merkmale des Oberbegriffs des Patentanspruchs 1 aufweist, in Verbindung mit den Merkmalen seines Kennzeichens gelöst.

Beim erfindungsgemäßen Faltdach ist dieses einerseits in mehrere Dachflächenabschnitte unterteilt, welche unabhängig voneinander beispielsweise durch Aufklappen so bewegt werden können, daß sich unterschiedlich große Dachöffnungen freilegen lassen. Durch diese Unterteilung erhält das Abdeckteil zugleich eine gewisse Grundeigensteifigkeit, so daß sich auch große Dachöffnungen im Dachbereich des Fahrzeugs abdecken lassen. Das Abdeckteil bzw. die Dachflächenabschnitte desselben sind ferner in den Führungsschienen gleitbeweglich derart geführt, daß man zugleich eine Art Schiebedacheigenschaft dadurch erhält, daß sich die übereinandergelegten Dachflächenabschnitte längs den dachfesten Längsführungen verschieben lassen und sich die Dachöffnung im jeweils gewünschten Bereich freilegen läßt. Durch das wenigstens eine mit den dachfesten Längsführungen zusammenarbeitende Führungsglied, welches aus den Längsführungen ausrückbar ist, läßt sich im Bedarfsfalle das gesamte Abdeckteil von der festen Dachfläche des Fahrzeugs lösen und abnehmen. Somit läßt sich eine insgesamt bezogen auf die Dachfläche des Fahrzeugs groß bemessene Dachöffnung freilegen, und das von der Dachfläche abgenommene Abdeckteil läßt sich dann im zusammengelegten Zustand im Fahrzeug verstauen.

Vorzugsweise werden die Längsführungen von im Querschnitt U-profilförmig ausgestatteten Führungsschienen gebildet, die beispielsweise aus Kunststoff hergestellt sein können und längs den Längskanten der Dachöffnung sich auf einfache Weise mit einem festen Dachflächenteil verbinden lassen.

Eine erste Ausführungsform eines Führungsgliedes umfaßt einen ausrückbaren Führungsstift, welcher beispielsweise in Richtung seiner Eingriffsstellung in die Längsführung federbelastet ist. Wenn man diesen Führungsstift entgegen der Kraft der Federvorbelastung beaufschlagt, läßt sich das Führungsglied von den Längsführungen lösen, um das Abdeckteil abnehmen zu können.

Eine zweite Ausführungsform des Führungsgliedes ist derart gestaltet, daß es zum Ausrücken von seiner Eingriffsstellung in die Außereingriffsstellung drehbar ist.

Um zu vermeiden, daß das Abdeckteil bzw. die Dachflächenabschnitte desselben sich bei fahrendem Fahrzeug und wenigstens teilweise aufgeklapptem Dachflächenabschnitt in den Längsführungen unbeabsichtigt bewegen, ist das Führungsglied an den Längsführungen in vorbestimmten Stellungen arretierbar. Hierzu kann der Stegteil der Längsführungen Rastausnehmungen haben, in die das Führungsglied des Abdeckteils einrasten kann. Als vorbestimmte Raststellungen kommen wenigstens die Stellungen in der Schließlage des Abdeckteils in Betracht, um das Abdeckteil in seiner Schließlage zuverlässig festzulegen. Es können auch längs den Längsführungen ein oder mehrere Zwischenstellungen zu Arretierungszwecken vorgesehen sein, um den oder die Flächenabschnitte in bevorzugten Stellungen zu halten.

Vorzugsweise umfaßt das Abdeckteil einen Versteifungsrahmen, der in eine der Anzahl der Dachflächenabschnitte entsprechende Anzahl von Rahmenteilen untergliedert ist. Hierdurch erhält man mehrere unabhängig voneinander klapp- und bewegbare Dachflächenabschnitte, welche zusammen das Abdeckteil bilden. In Abhängigkeit von der Länge der Dachöffnung können ein oder mehrere Querversteifungsglieder am Versteifungsrahmen vorgesehen sein.

Aus Stabilitätsgründen und aus Gründen einer leichtgängigen Verschiebebewegung der Dachflächenabschnitte längs den Längsführungen ist oder sind das oder die Verbindungsglied(er) des Abdeckteils am Versteifungsrahmen vorgesehen, wobei die jeweiligen Führungsglieder zweckmäßigerweise an den Knotenpunkten zwischen Querversteifungsgliedern und Längsversteifungsgliedern angeordnet sind.

Um ein Flattern der übereinandergelegten Dachflächenabschnitte bei wenigstens teilweise freigelegter Dachöffnung zu vermeiden, sind die übereinandergelegten Dachflächenabschnitte lösbar zusammengehalten. Hierzu kann eine Riemen- oder Laschenverbindung beispielsweise vorgesehen sein.

Gemäß einer bevorzugten Ausführungsform nach der Erfindung umfaßt die vordere und/oder die hintere Querseite des Abdeckteils eine Versteifungseinlage, um einen sicheren Halt des Faltdaches über die verrastbare Verbindungseinrichtung an der festen Dachfläche zu erzielen. Diese Versteifungsteile können in die Ausbildung des Versteifungsrahmens mit einbezogen werden, um die Eigensteifigkeit des Faltfaches zu erhöhen. Vorzugsweise ist die Auslegung derart getroffen, daß die Längsversteifungen des Versteifungsrahmens in die Versteifungseinlage(n) eingelegt sind. Hierbei ist der Versteifungsrahmen in Form einer Gerippekonstruktion ausgelegt, bei welcher die vorderen und die hinteren Querseiten von den jeweiligen Versteifungseinlagen gebildet werden. Die Längsversteifungsglieder sind in Längselemente unterteilt, die den jeweiligen Dachflächenabschnitten des Abdeckteils zugeordnet sind. Diese Längselemente sind vorzugsweise in der Nähe der Knotenstellen zu den Querversteifungen über eine lösbare Gelenkverbindungseinrichtung miteinander verbunden. Diese ist vorzugsweise derart ausgelegt, daß die formschlüssig am Gelenk ineinandergreifenden Enden der Längselemente ab einem gewissen Schwenkwinkel sich voneinander trennen und ein Übereinanderlegen gestatten.

Zweckmäßigerweise umfaßt die verrastbare Verbindungseinrichtung wenigstens ein Handgriffstück, um eine erleichterte Bedienung beim Ein- und Ausrasten zu ermöglichen.

Die Erfindung wird nachstehend anhand einer bevorzugten Ausführungsform unter Bezugnahme auf die beigefügte Zeichnung näher erläutert. Darin zeigt:
- Fig. 1: eine perspektivische Draufsicht auf ein Fahrzeugdach mit einem Faltdach nach der Erfindung,
- Fig. 1a: eine Ausschnittsansicht zur Verdeutlichung einer Ausführungsform eines Führungsgliedes und einer Knotenstelle eines Dachrahmens,
- Fig. 1b: eine Schnittansicht durch die vordere Querseite des Faltdaches zur Verdeutlichung einer Ausführungsform einer verrastbaren Verbindungseinrichtung mit der festen Dachfläche,
- Fig. 2: eine schematische Längsschnittansicht längs der Linie II-II in Fig. 1,
- Fig. 3: eine perspektivische Einzelteildarstellung zur Verdeutlichung einer Ausführungsvariante eines ein- und ausrückbaren Führungsgliedes,
- Fig. 4: eine schematische Schnittansichtsdarstellung zur Verdeutlichung einer Arretierung für das Abdeckteil in vorbestimmten Stellungen an den Längsführungen, und
- Fig. 5a - 5e: schematische Ansichten zur Verdeutlichung von Variationsmöglichkeiten bei dem Faltdach nach der Erfindung.

In den Figuren der Zeichnung sind gleiche oder ähnliche Teile mit denselben Bezugszeichen versehen.

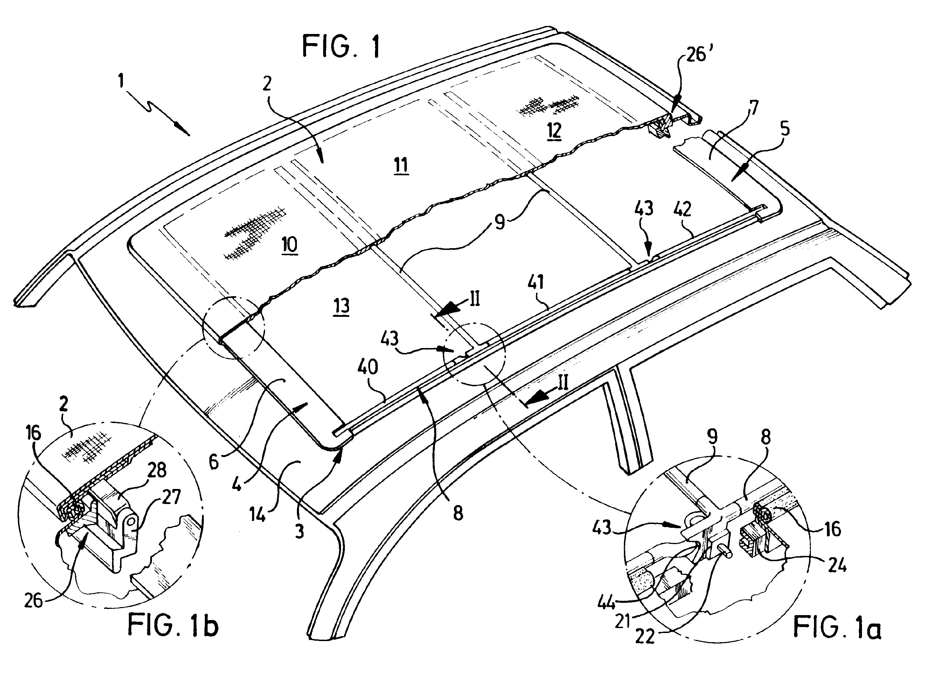

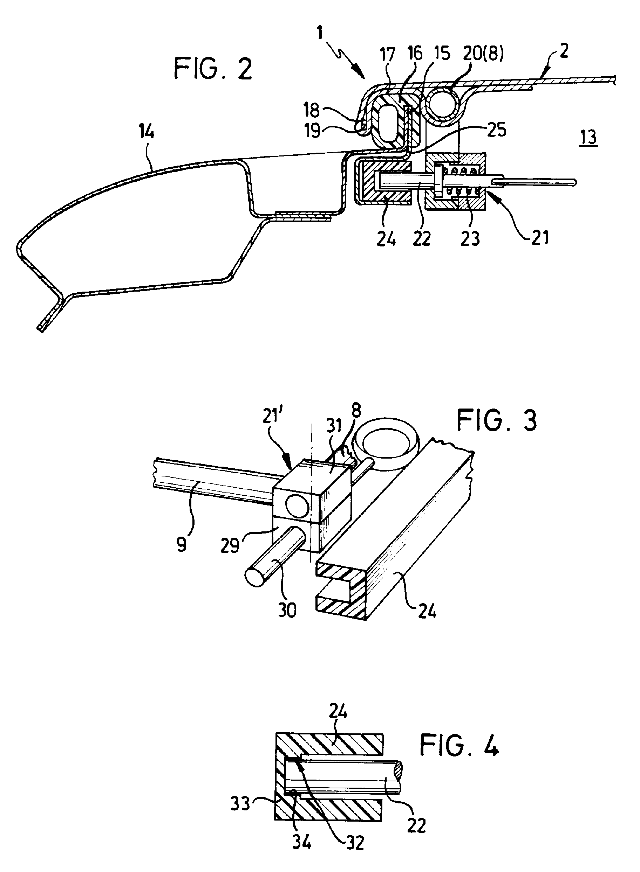

Unter Bezugnahme auf die Fig. 1 mit 1b sowie 1a in Verbindung mit Fig. 2 werden die wesentlichen Einzelheiten eines insgesamt mit 1 bezeichneten Faltdaches erläutert. Das Faltdach 1 weist ein faltbares Abdeckteil 2 auf, das aus einem flexiblen Material bestehen kann. Das Abdeckteil 2 umfaßt einen Versteifungsrahmen 3, der bei der Ausführungsform nach Fig. 1 an der vorderen Querseite 4 und der hinteren Querseite 5 eine Versteifungseinlage 6, 7 hat, in die in Form eines Gerippes ausgelegte Längsversteifungsteile 8 eingelegt sind, welche untereinander über Querversteifungsteile 9 verbunden sind. Hierdurch ist die Gesamtfläche des Abdeckteils 2 lediglich als Beispiel in drei Flächenabschnitte 10, 11, 12 in Fahrzeuglängsrichtung gesehen unterteilt, die hintereinander angeordnet und miteinander gekoppelt sind.

Ein solches Abdeckteil 2 mit den Flächenabschnitten 10 bis 12 dient zum Verschließen oder wenigstens teilweisen Freigeben einer Dachöffnung 13, die in einer festen Dachfläche 14 vorgesehen ist. Die Dachöffnung 13 wird von einer dachfesten Begrenzungskante 15 umgeben, auf die beim dargestellten Beispiel ein Profilteil 16 vorzugsweise aus einem elastischen Material in Form eines Umlaufteiles aufgesteckt ist. Dieses Profilteil 16 bildet in Verbindung mit dem Außenrandbereich des Abdeckteils 2 im geschlossenen Zustand desselben einen Dichtungsbereich. Vorzugsweise sind wenigstens längs den Längsrändern des Abdeckteils 2 im Material des Abdeckteils 2 Säume 18 vorgesehen, in welche ein Versteifungsteil 19 eingelegt ist, das beispielsweise von einem Spannseil oder dergleichen gebildet wird. Ein solches Spannseil kann umlaufend am Abdeckteil vorgesehen sein. Bei Verwendung eines Stahlseils kann zwischen dessen Enden eine Feder vorgesehen sein. Die Längsversteifungsteile 8 werden vorzugsweise von Rohrteilen 20 gebildet, die zu dem Versteifungsrahmen 3 gehören. Durch das Versteifungsteil 19 und die Rohrteile 20 der Längsversteifungen 8 wird erzielt, daß das Material des Abdeckteils 2 im Dichtungsbereich 17 zuverlässig gegen das Profilteil 16 anliegt und angedrückt wird. Ferner dient diese Anordnung auch zur Positionierung des Abdeckteils 2, wenn es beispielsweise nach der Abnahme vom Fahrzeugdach wiederum eingesetzt werden soll.

Die Längsversteifungsglieder 8 sind hierbei in Längsrichtung insbesondere so unterteilt, daß die Dachflächenabschnitte 10, 11, 12 aufeinander legbar sind. Hierzu sind die den jeweiligen Dachflächenabschnitten 10 bis 12 zugeordneten Längselemente 40, 41, 42 über eine lösbare Verbindungseinrichtung 43 vorzugsweise in der Nähe der Knotenstellen mit den Querversteifungsgliedern 9 verbunden. Wie insbesondere aus Fig. 1a zu ersehen ist, ist diese Verbindungseinrichtung in Form eines lösbaren Gelenks 44 derart ausgelegt, daß ab einem gewissen Schwenkwinkel zwischen den Längselementen 40, 41, 42 die am Gelenk 44 formschlüssig ineinandergreifenden Teile voneinander freikommen und ein Umklappen der Dachflächenabschnitte gestatten.

Wie in Fig. 1a in Verbindung mit Fig. 2 zu ersehen ist, sind wenigstens an den Knotenstellen zwischen den Querversteifungsteilen 9 und den Längsversteifungsteilen 8 Führungsglieder 21 vorgesehen, die beispielsweise einen Führungsstift 22 umfassen, der entgegen einer Vorbelastungsfeder 23 (Fig. 2) ein- und ausrückbar ist. Mit Hilfe des Führungsstifts 22 dieses Führungsgliedes 21 sind die Flächenabschnitte 10, 11, 12 des Abdeckteils 2 in Längsführungen 24 beweglich geführt. Die Längsführungen 24 werden beispielsweise von im Querschnitt U-förmig ausgebildeten Führungsschienen gebildet, die zweckmäßigerweise aus einem Kunststoff mit Selbstschmiereigenschaften ausgebildet sind. Diese Längsführungen 24 sind längs den beiden gegenüberliegenden Längsseiten der Dachöffnung 13 angeordnet und mit Hilfe eines geeigneten Halters 25 in einem Abstand unterhalb der festen Dachfläche 14 aufgenommen und gehalten.

In Fig. 1b ist eine Ausführungsform einer verrastbaren Verbindungseinrichtung 26 gezeigt. Diese hat ein Griffteil, mittels welchem ein Rastglied 28 in eine Einraststellung und eine Ausraststellung verschwenkbar ist. In der Einraststellung, die beispielsweise in Fig. 1b gezeigt ist, drückt das Rastglied 28 die vordere Querseite 4 des Abdeckteils 2 gegen die feste Dachfläche 14, um das Abdeckteil 2 in geschlossenem Zustand so gespannt zu halten, daß über die Dichtungsbereiche 17 im Zusammenwirken mit dem Profilteil 16 ein zuverlässiger dichter Abschluß des Abdeckteils 2 im geschlossenen Zustand gegeben ist, wobei zum Spannen auch das Versteifungsteil 19 in Form des Spannseils beiträgt. Dn der hinteren Querseite 5 kann gegebenenfalls eine gleiche oder ähnliche verrastbare Verbindungseinrichtung 26' vorgesehen sein. Selbstverständlich können pro Querseite 4 oder 5 auch beispielsweise zwei oder mehrere derartige verrastbarer Verbindungseinrichtungen 26, 26' angeordnet sein.

In Fig. 3 ist eine Ausführungsvariante eines Führungsgliedes 21' gezeigt. Dieses Führungsglied 21' umfaßt ein drehbares Teil 29, das einen Führungsstift 30 trägt. Dieses drehbare Teil 29 beispielsweise kann auf ein Basisteil 31 des Führungsgliedes 21' aufgeclipst und um die mit strichpunktierter Linie dargestellte Achse drehbar sein, so daß es beispielsweise von einer in Fig. 3 dargestellten Ausrückstellung um einen Winkelbereich von 90° um die Achse gedreht werden kann, so daß der Führungsstift 30 in den U-förmigen Kanal der Längsführung 24 in seiner Eingriffsstellung eingreift.

Aus Fig. 4 ist ein Beispiel einer Arretierung des Führungsgliedes 21 oder 21' in einer vorbestimmten Stellung im Bereich der Längsführungen 24 gezeigt. Im Stegteil 33 der Längsführung 24 ist eine Rastausnehmung 34 vorgesehen, in welche beispielsweise der Führungsstift 22, 30 des Führungsgliedes 21, 21' geringfügig eingreifen kann, um das zugeordnete Führungsglied 21, 21' und hierdurch den jeweiligen Flächenabschnitt 10 bis 12 des Abdeckteils 2 in vorbestimmten Stellungen festzulegen. Als vorbestimmte Stellungen kommen insbesondere jene Stellungen der Führungsglieder 21, 21' in Betracht, die diese bei geschlossenem Abdeckteil 2 einnehmen. Hierdurch läßt sich ein Flattern des Abdeckteils 2 bei fahrendem Fahrzeug möglichst gering halten. Natürlich können an weiteren bevorzugten Stellungen längs den Längsführungen 24 entsprechende Arretierungen 32 vorgesehen sein.

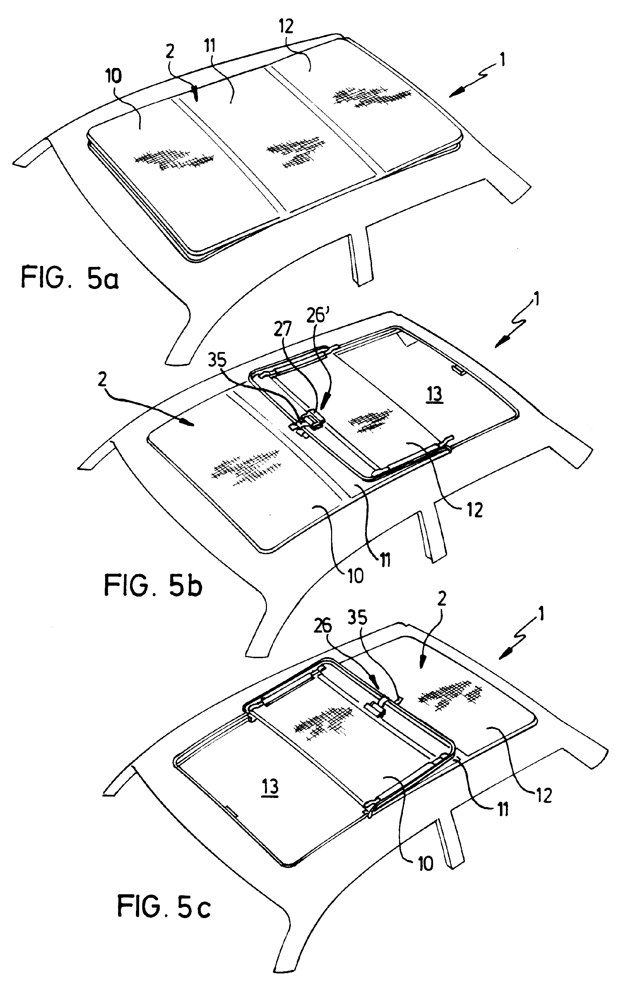

Anhand der Fig. 5a bis 5e werden verschiedene Variationsmöglichkeiten für die Freigabe von unterschiedlich großen Öffnungen mit Hilfe des Faltdaches 1 nach der Erfindung verdeutlicht.

Bei Fig. 5a sind die beiden äußeren Flächenabschnitte 10, 12 des Abdeckteils 2 geringfügig ausgestellt, so daß diese eine Art Lüftungsstellung einnehmen. Hierzu sind die beiden verrastbaren Verbindungseinrichtungen 26 oder 26' wenigstens teilweise gelöst. Natürlich kann auch nur einer der Flächenabschnitte 10 oder 12 in die Lüftungsstellung ausgestellt werden, wenn nur eine der verrastbaren Verbindungseinrichtungen 26 oder 26' in die Teillösestellung gebracht wird. Zweckmäßigerweise sind zusätzliche nicht näher dargestellte Arretierungen vorhanden, die den oder die Dachflächenabschnitte 10, 12 zuverlässig in den zugeordneten Ausstellagen halten.

Bei Fig. 5b ist beispielsweise der hintere Bereich der Dachöffnung 13 dadurch freigelegt, daß der hintere Flächenabschnitt 12 des Abdeckteils 2 in Richtung nach vorne aufgeklappt ist und auf dem Flächenabschnitt 11 des Abdeckteils 2 aufliegt. Hierbei ist die hintere, verrastbare Verbindungseinrichtung 26' gelöst, während die vordere verrastbare Verbindungseinrichtung 26 in eingerasteter Stellung ist. Obgleich nicht näher dargestellt ist, ist der Flächenabschnitt 12 in seiner auf den Flächenabschnitt 11 aufliegenden Lage an diesem gehalten, um ein beispielsweise durch den Fahrtwind verursachtes Zuklappen des Flächenabschnittes 12 zu vermeiden. Hierzu kann beispielsweise ein Riemen 35 durch eine vom Griffteil 27 der verrastbaren Verbindungseinrichtung 26' gebildete ösenförmige Öffnung 37 durchgezogen und festgehalten werden. In analoger Weise können hierfür auch Klettverschlüsse o.dgl. verwendet werden.

In Fig. 5c ist analog zu Fig. 5b der vordere Flächenabschnitt 10 auf den Flächenabschnitt 11 geklappt, während der hintere Flächenabschnitt 12 über die verrastbare Verbindungseinrichtung 26' an der festen Dachfläche 14 festgelegt ist.

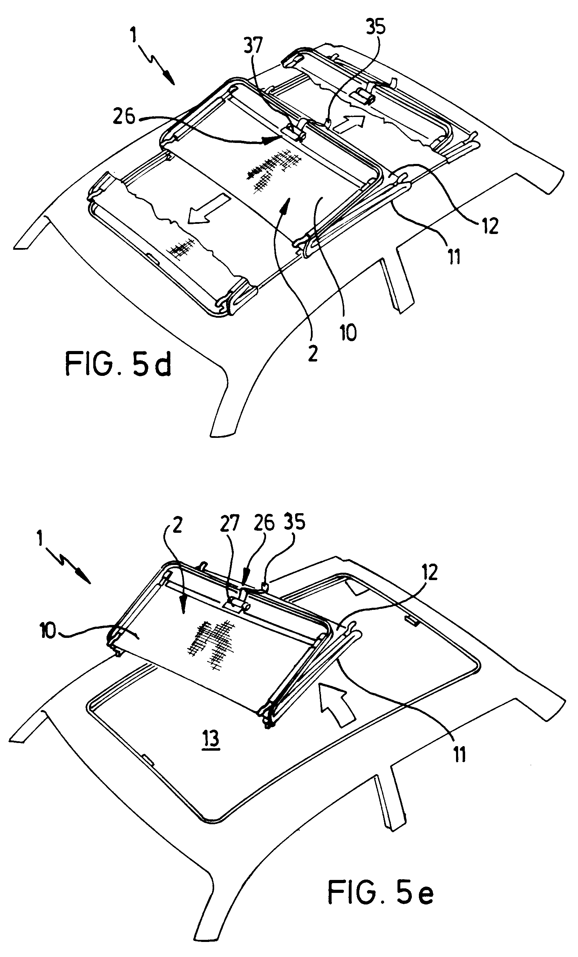

Wie anhand von Fig. 5d verdeutlicht ist, kann das Abdeckteil 2, ausgehend von der Lage nach den Fig. 5b oder 5c oder auch in der Lage, in der die beiden Flächenabschnitte 10, 12 auf den Flächenabschnitt 11 geklappt und gefaltet sind, mit Hilfe den Führungsgliedern 21, 21' längs den Längsführungen 24 in die jeweils gewünschte Lage geschoben werden, so daß die Größe der vorderen und hinteren Öffnungsbereiche der Dachöffnung 13 auch hinsichtlich ihrer Lage variabel sind. Wie mit Pfeilen angedeutet ist, kann das Klappaket mit den aufeinandergeklappten Flächenabschnitten 10, 11 und 12 in Längsrichtung in Richtung nach vorne und nach hinten bedarfsweise verschoben werden. Über entsprechende zugeordnete Arretierungen 32 in den Längsführungen 24 kann dieses von den Flächenabschnitten 10 bis 12 gebildete Paket an bevorzugten Stellungen arretiert werden, um eine unbeabsichtigte Verschiebebewegung längs den Längsführungen 24 beispielsweise während des Anfahrens und/oder Abbremsens des Fahrzeugs zu vermeiden.

Ferner wird nach Fig. 5e verdeutlicht, daß das Paket der aufeinandergeklappten Flächenabschnitte 10 bis 12 des Abdeckteils 2 auch insgesamt aus der Dachöffnung 13 entnommen werden kann, indem die Führungsglieder 21, 21' aus den Längsführungen 24 ausgerückt werden. Dieses zu einem Paket zusammengefaltete Abdeckteil 2 mit den Flächenabschnitten 10 bis 12 kann dann im Fahrzeug beispielsweise im Kofferraum verstaut werden. Es ist dann die gesamte in der festen Dachfläche 14 vorgesehene Dachöffnung 13 freigelegt.

Die voranstehenden Fig. 5a bis 5e verdeutlichten lediglich die wesentlichsten Variationsmöglichkeiten hinsichtlich der Verwendung des Abdeckteils 2 beim Faltdach 1 nach der Erfindung. In Abhängigkeit von der Anzahl der hintereinander angeordneten und miteinander gekoppelten Flächenabschnitte 10 bis 12 des Abdeckteils 2 sind natürlich noch weitere Variationsmöglichkeiten gegeben. Insgesamt ist hieraus zu ersehen, daß das Faltdach 1 nach der Erfindung mit relativ einfachen Mitteln eine Vielzahl von Möglichkeiten hinsichtlich des Freilegens oder teilweise Freilegens der Dachöffnung 13 bietet. Durch die Verknüpfung eines Falt- oder Klappdaches mit einer Längsverschiebebewegung ergibt sich auf konstruktiv einfache Weise ein Faltdach 1 mit völlig neuartigen Einsatzmöglichkeiten. Wenn das Abdeckteil 2 beispielsweise umgekehrt zu der Darstellung in Fig. 5e wiederum aufgesetzt werden soll, so wird das so über die Dachöffnung 13 gelegt, daß entsprechend Fig.2 mit Hilfe des Profilteils 16 das Abdeckteil 2 im Zusammenwirken mit dem Versteifungsteil 19 und den Längsversteifungsteilen 8 vorpositioniert ist, so daß sich die Führungsglieder 21, 21' leicht in dem U-förmigen Kanal der Längsführungen 24 in ihre Einrückstellung bringen lassen. Somit zeichnet sich das Faltdach 1 nach der Erfindung auch durch eine einfache Handhabungs- und Bedienungsweise aus. Auch läßt sich dieses Faltdach 1 schnell und einfach bei einem Fahrzeug beispielsweise am Montageband einbauen, da sich das Abdeckteil 2 als vorgefertigtes Teil einsetzen läßt, wenn zuvor das Profilteil 16 auf die Begrenzungskante 15 der Dachöffnung 13 aufgesteckt ist.

Selbstverständlich ist die Erfindung nicht auf die voranstehend beschriebenen und in der Zeichnung dargestellten Einzelheiten der bevorzugten Ausführungsformen des Faltdaches 1 beschränkt, sondern es sind zahlreiche Abänderungen und Modifikationen möglich, die der Fachmann im Bedarfsfall treffen wird, ohne den Erfindungsgedanken zu verlassen.

Es brauchen beispielsweise in Abweichung von den Figuren die Flächenabschnitte 10 bis 12 nicht in etwa gleich groß bemessen sein, sondern sie können auch unterschiedlich sein. Zum andern können die Längsführungen 24 auch auf andere Weise als dargestellt dachfest gehalten sein, oder sie können auch auf entsprechend vorstehende Kanten aufgesteckt und dann mit diesen fest verbunden sein. Wesentlich ist das erfindungsgemäße Lösungsprinzip, Faltdacheigenschaften oder Klappdacheigenschaften mit solchen eines Schiebedachs mit Hilfe von Längsführungen 24 zu verwirklichen, wobei die Ausgestaltung ferner so gewählt ist, daß das Abdeckteil 2 insgesamt vom Fahrzeugdach abnehmbar ist, um die gesamte Dachöffnung 13 freizulegen. Anstelle des Profilteils 16 können auch andere gleichwirkende oder ähnlichwirkende Teile vorgesehen werden.

### Bezugszeichen

- 1: Faltdach insgesamt
- 2: Abdeckteil insgesamt
- 3: Versteifungsrahmen insgesamt
- 4: vordere Querseite
- 5: hintere Querseite
- 6: Versteifungseinlage für 4
- 7: Versteifungseinlage für 5
- 8: Längsversteifungsglieder
- 9: Querversteifungsglieder
- 10, 11, 12: Dachflächenabschnitte
- 13: Öffnung
- 14: feste Dachfläche
- 15: Begrenzungskante
- 16: Profilteil
- 17: Dichtungsbereich
- 18: Säume
- 19: Versteifungsteil bzw. Spannseil
- 20: Rohrteile (Längsversteifungen 8)
- 21: Führungsglied
- 21': Führungsglied in Fig. 3
- 22: Führungsstift
- 23: Vorbelastungsfeder
- 24: Längsführungen
- 25: Halter
- 26,26': verrastbare Verbindungseinrichtungen
- 27: Griffteil
- 28: Rastglied
- 29: drehbares Teil
- 30: Führungsstift in Fig. 3
- 31: Basisteil
- 32: Arretierung insgesamt
- 33: Stegteil der Längsführung 24
- 34: Rastausnehmung
- 35: Riemen
- 36: Schlaufe
- 37: ösenförmige Öffnung
- 40: Längselement
- 41: Längselement
- 42: Längselement
- 43: lösbare Verbindungseinrichtung
- 44: Gelenk

## Patentansprüche

1. Faltdach für Fahrzeuge, mit einem faltbaren Abdeckteil (2), das eine in einer festen Dachfläche (14) des Fahrzeugs vorgesehene Dachöffnung (13) wahlweise verschließt oder wenigstens teilweise freigibt, und das wenigstens zwei in Fahrzeuglängsrichtung hintereinander angeordnete, übereinanderklappbare und gekoppelte Dachflächenabschnitte (10 bis 12) umfaßt, wobei wenigstens eine Querseite über eine verrastbare Verbindungseinrichtung (26, 26') mit der festen Dachfläche (14) lösbar verbunden ist, **dadurch gekennzeichnet,** daß das Abdeckteil (2) bzw. die Dachflächenabschnitte (10 bis 12) desselben an dachfesten Längsführungen (24) gleitbeweglich geführt sind, und daß am Abdeckteil (2) wenigstens ein mit den dachfesten Längsführungen (24) zusammenarbeitendes Führungsglied (21, 21') vorgesehen ist, welches aus den Längsführungen (24) ausrückbar ist.

2. Faltdach nach Anspruch 1, dadurch gekennzeichnet, daß die Längsführungen (24) als im Querschnitt U-profilförmig gestaltete Führungsschienen ausgebildet sind.

3. Faltdach nach Anspruch 1 oder 2, dadurch gekennzeichnet, daß das Führungsglied (21, 21') einen ausrückbaren Führungsstift (22, 30) umfaßt.

4. Faltdach nach Anspruch 3, dadurch gekennzeichnet, daß der Führungsstift (22, 30) in Richtung seiner in die Längsführung eingreifenden Stellung federbelastet ist.

5. Faltdach nach Anspruch 1 oder 2, dadurch gekennzeichnet, daß das Führungsglied (21') zum Ausrücken von seiner Eingriffsstellung in die Außereingriffsstellung drehbar ist.

6. Faltdach nach einem der Ansprüche 1 bis 5 dadurch gekennzeichnet, daß das Führungsglied (21,21') an den Längsführungen (24) in vorbestimmten Stellungen arretierbar ist.

7. Faltdach nach Anspruch 6, dadurch gekennzeichnet, daß das Stegteil (33) der Längsführungen (24) Rastausnehmungen (34) hat, in die das Führungsglied (21, 21') des Abdeckteils (2) einrastet.

8. Faltdach nach Anspruch 6 oder 7, dadurch gekennzeichnet, daß es sich bei den vorbestimmten Raststellungen wenigstens um die Stellungen in der Schließlage des Abdeckteils (2) handelt.

9. Faltdach nach einem der Ansprüche 6 bis 8, dadurch gekennzeichnet, daß das Abdeckteil (2) längs den Längsführungen (24) an ein oder mehreren Zwischenstellungen arretierbar ist.

10. Faltdach nach einem der vorangehenden Ansprüche, dadurch gekennzeichnet, daß das Abdeckteil (2) einen Versteifungsrahmen (3) umfaßt, der in eine der Anzahl der Dachflächenabschnitte (10 bis 12) entsprechende Anzahl von Rahmenteilen untergliedert ist.

11. Faltdach nach Anspruch 10 dadurch gekennzeichnet, daß der Versteifungsrahmen (3) Querversteifungsteile (9) umfaßt.

12. Faltdach nach einem der Ansprüche 1 bis 9 in Verbindung mit Anspruch 10 oder Anspruch 11, dadurch gekennzeichnet, daß das Führungsglied (21, 21') des Abdeckteils (2) am Versteifungsrahmen (3) vorgesehen ist.

13. Faltdach nach Anspruch 12, dadurch gekennzeichnet, daß das Führungsglied (21, 21') im Bereich des Knotenpunktes zwischen den Querversteifungsgliedern (9) und den Längsversteifungsgliedern (8) des Versteifungsrahmens (3) angeordnet ist.

14. Faltdach nach einem der vorangehenden Ansprüche, dadurch gekennzeichnet, daß das Abdeckteil (2) insgesamt abnehmbar ist.

15. Faltdach nach einem der vorangehenden Ansprüche, dadurch gekennzeichnet, daß die übereinandergelegten Dachflächenabschnitte (10 bis 12) lösbar zusammengehalten sind.

16. Faltdach nach Anspruch 15, dadurch gekennzeichnet, daß zum lösbaren Zusammenhalten eine Riemen-Ösenverbindung (35 bis 37) vorgesehen ist.

17. Faltdach nach einem der vorangehenden Ansprüche, dadurch gekennzeichnet, daß die vordere und/oder hintere Querseite (4, 5) des Abdeckteils (2) eine Versteifungseinlage (6, 7) umfaßt.

18. Faltdach nach einem der Ansprüche 10 bis 13 in Verbindung mit Anspruch 17, dadurch gekennzeichnet, daß die Versteifungseinlage(n) (6, 7) Teile des Versteifungsrahmens (3) bilden.

19. Faltdach nach einem der Ansprüche 10 bis 18, dadurch gekennzeichnet, daß die Längsversteifungsglieder (8) in den Dachfächenabschnitten (10 bis 12) zugeordnete Längselemente (40 bis 42) unterteilt und jeweils über eine lösbare Gelenk-Verbindungseinrichtung (43, 44) miteinander verbunden sind.

20. Faltdach nach Anspruch 19, dadurch gekennzeichnet, daß die Längselemente (40 bis 42) ab einem bestimmten Winkel zueinander am Gelenk (44) freikommen.

21. Faltdach nach einem der Ansprüche 18 bis 20, dadurch gekennzeichnet, daß die Längsversteifungsglieder (8) bzw. die Längselemente (40 bis 42) des Versteifungsrahmens (3) in die Versteifungseinlage(n) (6, 7) eingelegt sind.

22. Faltdach nach einem der vorangehenden Ansprüche, dadurch gekennzeichnet, daß die verrastbare Verbindungseinrichtung (26, 26') wenigstens ein Griffteil (27) umfaßt.

23. Faltdach nach einem der vorangehenden Ansprüche, dadurch gekennzeichnet, daß wenigstens ein Dachflächenabschnitt (10, 12) in eine Lüftungsstellung ausstellbar ist.

24. Faltdach nach Anspruch 23, dadurch gekennzeichnet, daß der wenigstens eine Dachflächenabschnitt (10, 12) mittels einer Arretierung in seiner Ausstellage gehalten ist.

25. Faltdach nach Anspruch 23 und 24, dadurch gekennzeichnet, daß beide äußeren Flächenabschnitte (10, 12) des Abdeckteils (2) ausstellbar sind.

## Claims

1. A folding roof for vehicles, with a foldable covering part (2) which optionally occludes or at least partially exposes a roof opening (13) provided in a fixed roof surface (14) of the vehicle and which comprises disposed one after the other in the longitudinal direction of the vehicle, at least two roof surface portions (10 to 12) coupled to and adapted to be folded over one another, whereby at least one transverse side is separably connected to the fixed roof surface (14) via a lockable connecting means (26, 26'), characterised in that the covering part (2) or roof surface portions (10 to 12) thereof are guided for sliding movement on longitudinal guides (24) rigid with the roof, and in that there is, on the covering part (2) and cooperating with the longitudinal guides (24) fixed to the roof, at least one guide member (21, 21') which can be disengaged from the longitudinal guides (24).

2. A folding roof according to Claim 1, characterised in that the longitudinal guides (24) are constructed as cross-sectionally U-shaped guide rails.

3. A folding roof according to Claim 1 or 2, characterised in that the guide member (21, 21') comprises a disengageable guide pin (22, 30).

4. A folding roof according to Claim 3, characterised in that the guide pin (22, 30) is spring-loaded in the direction of its position in which it engages the longitudinal guide.

5. A folding roof according to Claim 1 or 2, characterised in that the guide member (21') is rotatable in order to move it from its position of engagement into its disengaged position.

6. A folding roof according to one of Claims 1 to 5, characterised in that the guide member (21, 21') can be locked in predetermined positions on the longitudinal guides (24).

7. A folding roof according to Claim 6, characterised in that the web part (33) of the longitudinal guides (24) has catches (34) into which the guide member (21, 21') of the covering part (2) engages.

8. A folding roof according to Claim 6 or 7, characterised in that the predetermined catch positions are at least those positions which correspond to the closed position of the covering part (2).

9. A folding roof according to one of Claims 6 to 8, characterised in that the covering part (2) can be locked at one or a plurality of intermediate positions along the longitudinal guides (24).

10. A folding roof according to one of the preceding Claims, characterised in that the covering part (2) comprises a stiffening frame (3) which is subdivided into a number of frame parts corresponding to the number of roof surface portions (10 to 12).

11. A folding roof according to Claim 10, characterised in that the stiffening frame (3) comprises transverse stiffening members (9).

12. A folding roof according to one of Claims 1 to 9 in conjunction with Claim 10 or Claim 11, characterised in that the guide member (21, 21') of the covering part (2) is provided on the stiffening frame (3).

13. A folding roof according to Claim 12, characterised in that the guide member (21, 21') is disposed in the region of the nodal point between the transverse stiffening members (9) and the longitudinal stiffening members (8) of the stiffening frame (3).

14. A folding roof according to one of the preceding Claims, characterised in that the covering part (2) can be removed in its entirety.

15. A folding roof according to one of the preceding Claims, characterised in that the superposed roof surface portions (10 to 12) are held together in a separable manner.

16. A folding roof according to Claim 15, characterised in that a strap-and-ring connection (35 to 37) is provided for the said separable holding of the parts together.

17. A folding roof according to one of the preceding Claims, characterised in that the front and/or rear transverse side (4, 5) of the covering part (2) comprises a stiffening inlay (6, 7).

18. A folding roof according to one of Claims 10 to 13 in conjunction with Claim 17, characterised in that the stiffening inlay(s) (6, 7) form(s) part(s) of the stiffening frame (3).

19. A folding roof according to one of Claims 10 to 18, characterised in that the longitudinal stiffening members (8) are subdivided into longitudinal elements (40 to 42) associated with the roof surface portions (10 to 12) and are connected to one another by respective separable articulating connecting means (43, 44).

20. A folding roof according to Claim 19, characterised in that with effect from a specific angle in respect of each other, the longitudinal elements (40 to 42) come apart at the joint (44).

21. A folding roof according to one of Claims 18 to 20, characterised in that the longitudinal stiffening members (8) or the longitudinal elements (40 to 42) of the stiffening frame (3) are inserted into the stiffening inlays (6, 7).

22. A folding roof according to one of the preceding Claims, characterised in that the interlockable connecting means (26, 26') comprises at least one handle part (27).

23. A folding roof according to one of the preceding Claims, characterised in that at least one roof surface portion (10, 12) can be extended into a ventilation position.

24. A folding roof according to Claim 23, characterised in that the at least one roof surface portion (10, 12) is held in its extended position by a locking means.

25. A folding roof according to Claim 23 and 24, characterised in that both outer surface portions (10, 12) of the covering part (2) can be opened out.

## Revendications

1. Toit repliable pour véhicules, comportant une couverture repliable (2) qui, à volonté, obture ou libère au moins partiellement une ouverture (13) pratiquée dans le toit rigide (14) du véhicule et qui est constituée d'au moins deux sections (10 à 12) accouplées se succédant dans le sens de marche du véhicule et rabattables l'une sur l'autre, au moins une face transversale de la couverture étant reliée de manière amovible au toit rigide (14) par un dispositif (26, 26') de blocage, caractérisé en ce que la couverture (2), c'est-à-dire ses sections (10 à 12) peuvent coulisser sur des guides longitudinaux (24) solidaires du toit rigide, cette couverture étant équipée d'au moins un organe de guidage (21, 21') coopérant avec les guides longitudinaux (24), avec possibilité de se séparer de ces derniers.

2. Toit repliable selon la revendication 1, caractérisé en ce que les guides longitudinaux (24) sont constitués par des rails faits d'un profilé en U.

3. Toit repliable selon la revendication 1 ou 2, caractérisé en ce que l'organe de guidage (21, 21') comporte une broche de guidage escamotable (22, 30).

4. Toit repliable selon la revendication 3, caractérisé en ce que la broche de guidage (22, 30) est soumise à l'action d'un ressort, dans le sens de son engagement dans le guidage longitudinal.

5. Toit repliable selon la revendication 1 ou 2, caractérisé en ce que l'organe de guidage (21') peut passer de la position engagée à la position désengagée, par rotation.

6. Toit repliable selon une des revendication 1 à 5, caractérisé en ce que l'organe de guidage (21, 21') peut être maintenu en place, en des endroits déterminés des guides longitudinaux (24).

7. Toit repliable selon la revendication 6, caractérisé en ce que le fond (33) des guides longitudinaux (24) comporte des évidements d'arrêt (34) dans lesquels vient se bloquer l'organe de guidage (21, 21') de la couverture (2).

8. Toit repliable selon la revendication 6 ou 7, caractérisé en ce que les positions d'arrêt prédéterminées comprennent au moins celles correspondant à la fermeture de la couverture (2).

9. Toit repliable selon une des revendications 6 à 8, caractérisé en ce que la couverture (2) peut être immobilisée, le long des guides (24) dans une ou plusieurs positions intermédiaires.

10. Toit repliable selon une des revendications précédentes, caractérisé en ce que la couverture (2) comporte un cadre raidisseur (3) divisé en éléments dont le nombre correspond à celui des sections (10 à 12) de la couverture.

11. Toit repliable selon la revendication 10, caractérisé en ce que le cadre raidisseur (3) comporte des traverses de rigidité (9).

12. Toit repliable selon une des revendication 1 à 9, en combinaison avec la revendication 10 ou la revendication 11, caractérisé en ce que l'organe de guidage (21, 21') de la couverture (2) est monté sur le cadre raidisseur (3).

13. Toit repliable selon la revendication 12, caractérisé en ce que l'organe de guidage (21, 21') est disposé près des points de rencontre des traverses de rigidité (9) avec les longerons de rigidité (8) du cadre raidisseur (3).

14. Toit repliable selon une des revendications précédentes, caractérisé en ce que la couverture (2) peut être entièrement retirée.

15. Toit repliable selon une des revendications précédentes, caractérisé en ce que les sections (10 à 12) de la couverture, repliées les unes sur les autres, constituent un ensemble amovible.

16. Toit repliable selon la revendication 15, caractérisé en ce que pour réaliser cet ensemble amovible, il est prévu une liaison par courroie et passant.

17. Toit repliable selon une des revendications précédentes, caractérisé en ce que la face transversale avant et/ou arrière (4, 5) de la couverture (2) comporte un insert raidisseur (6, 7).

18. Toit repliable selon une des revendications 1 à 13, en combinaison avec la revendication 17, caractérisé en ce que le ou les inserts raidisseurs (6, 7) fait ou font partie du cadre raidisseur (3).

19. Toit repliable selon une des revendications 10 à 18, caractérisé en ce que les éléments longitudinaux (40 à 42) associés aux organes raidisseurs longitudinaux (8) des sections de la couverture (10 à 12) sont divisés et reliés entre eux respectivement par un dispositif amovible de liaison articulé (43, 44).

20. Toit repliable selon la revendication 19, caractérisé en ce que les éléments longitudinaux (40 à 42) se trouvent libérés les uns des autres, à partir d'un angle donné de l'articulation (44).

21. Toit repliable selon une des revendications 18 à 20, caractérisé en ce que les organes raidisseurs longitudinaux (8) ou les éléments longitudinaux (40 à 42) du cadre raidisseur (3) sont emmanchés dans le ou les inserts raidisseurs (6, 7).

22. Toit repliable selon une des revendications précédentes, caractérisé en ce que le dispositif de blocage amovible (26, 26') comprend au moins une pièce d'accrochage (27).

23. Toit repliable selon une des revendications précédentes, caractérisé en ce qu'au moins une section (10, 12) de la couverture peut être mise en position d'aération par relevage.

24. Toit repliable selon la revendication 23) caractérisé en ce qu'au moins une section (10, 12) de la couverture peut être maintenue en position relevée par un organe de blocage.

25. Toit repliable selon les revendications 23 et 24, caractérisé en ce que les deux sections externes (10, 12) de la couverture (2) peuvent être relevées.
